# EUROPÄISCHE PATENTSCHRIFT

(11) **EP 3 374 924 B1**
(45) Veröffentlichungstag und Bekanntmachung des Hinweises auf die Patenterteilung: **25.03.2020**
(21) Anmeldenummer: 16790306.1
(22) Anmeldetag: 25.10.2016
(51) Int. Cl.: G06F 21/83, G06F 3/01, H04L 29/06, G06F 3/0488

(54) **VERFAHREN ZUM AUSLÖSEN EINER SICHERHEITSRELEVANTEN FUNKTION EINES SYSTEMS UND SYSTEM**
METHOD FOR TRIGGERING A SECURITY-RELEVANT FUNCTION OF A SYSTEM, AND SYSTEM
PROCÉDÉ DE DÉCLENCHEMENT D'UNE FONCTION RELATIVE À LA SÉCURITÉ D'UN SYSTÈME ET SYSTÈME

(30) Priorität: 11.11.2015 DE 102015222234
(43) Veröffentlichungstag der Anmeldung: 19.09.2018
(73) Patentinhaber: Volkswagen Aktiengesellschaft, 38440 Wolfsburg (DE)
(72) Erfinder: REMELE, Juri, 38471 Rühen (DE); MROWCZYNSKI, Mirko, 38528 Adenbüttel (DE); FRANK, Hendrik, 38102 Braunschweig (DE)
(86) Internationale Anmeldenummer: PCT/EP2016/075618
(87) Internationale Veröffentlichungsnummer: WO 2017/080810

(56) Entgegenhaltungen:
- WO-A1-2015/074425
- DE-A1-102013 012 394

## Beschreibung

Die Erfindung betrifft ein Verfahren zum Auslösen einer sicherheitsrelevanten Funktion eines Systems mittels eines Endgeräts und ein solches System.

Aus der DE 20 2014 103 258 U1 ist ein mobiles Endgerät bekannt, umfassend eine Anzeigeeinheit, die zwischen einem inaktivierten Zustand, in dem keine Beleuchtung an die Anzeigeeinheit angelegt ist, und einem aktivierten Zustand, in dem Beleuchtung an die Anzeigeeinheit angelegt ist, umschalten kann. Weiter umfasst das mobile Endgerät eine Steuereinheit, die derart ausgebildet ist, einen gesperrten Zustand des mobilen Endgeräts freizugeben und die Anzeigeeinheit in den aktivierten Zustand umzuschalten, wenn ein Berührungsmuster im inaktivierten Zustand der Anzeigeeinheit eingegeben worden ist und das eingegebene Berührungsmuster mit einem von mindestens einem vorgegebenen Muster übereinstimmt. Dabei ist das mobile Endgerät im inaktivierten Zustand der Anzeigeeinheit und/oder im gesperrten Zustand des mobilen Endgeräts dazu fähig, einen Schlummermodus durchzuführen, in dem Berührungseingaben mit einer niedrigeren Rate als im aktivierten Zustand der Anzeigeeinheit erkennbar sind. Dabei kann das Berührungsmuster ein Tippmuster sein, das eine Vielzahl von sequentiellen Berührungseingaben umfasst, die ein Muster bilden können, wenn sie in ihrer sequenziellen Reihenfolge verbunden werden. Alternativ kann das Bewegungsmuster eine fortlaufende Bewegungseingabe umfassen, d.h. eine Bewegungsbahn oder Bewegungsspur.

Aus der DE 10 2011 090 135 A1 ist ein Verfahren für eine sicherheitsrelevante Eingabe über ein Anzeigegerät mit Berührungseingabe, insbesondere über ein Touchscreen, bekannt, wobei das Verfahren folgende Verfahrensschritte Umfasst:
Übertragung von Bilddaten über eine Bilddatenleitung von einer Recheneinheit an ein Anzeigegerät mit einer Erfassungskomponente zur Erfassung unterschiedlicher Berührungseingaben an der Anzeige;
Ermittlung einer Berührungseingabe durch Auslesen der Erfassungskomponente;
Auslesen der Erfassungskomponente des Anzeigegeräts oder einer zusätzlichen Erfassungskomponente zur Auswahl eines Überwachungsbereichs durch eine mit der Bilddatenleitung verbundene Prüfeinheit, wobei der Überwachungsbereich demjenigen Teilbereich entspricht, innerhalb dessen die ermittelte Berührungseingabe erfolgte;
Erstellen eines Prüfcodes in der Prüfeinheit für denjenigen Teil der Bilddaten, die zur Anzeige im Überwachungsbereich vorgesehen sind; und
Ausgabe bzw. Auslesen des durch die Prüfeinheit erstellten Prüfcodes, insbesondere zwecks Veranlassung einer sicherheitsgerichteten Reaktion.

Hierdurch kann bei Anzeigegeräten mit Berührungseingabe sichergestellt werden, dass genau die Betätigung bzw. Eingabe erkannt wird, die vom Bediener auch tatsächlich durchgeführt wurde, gegebenenfalls auch unabhängig davon, wo diese sich innerhalb der Anzeige befunden hat.

Aus der DE 10 2013 012 394 A1 ist ein Verfahren zur Fernsteuerung einer Funktion eines Fahrzeugs bekannt, wobei mittels einer tragbaren Bedienvorrichtung eine von einem Benutzer ausgeführte Geste erfasst wird und eine drahtlose Kommunikationsverbindung zwischen der tragbaren Bedienvorrichtung und dem Fahrzeug aufgebaut wird. Dabei werden zur Steuerung der Funktion des Fahrzeugs vordefinierte Gesten zugeordnet und abgelegt. Die erfasste Geste wird zur Steuerung der Funktion des Fahrzeugs mittels der Kommunikationsverbindung an das Fahrzeug übermittelt. Im Fahrzeug wird dann die erfasste Geste mit den vordefinierten Gesten verglichen und bei der Übereinstimmung die Funktion des Fahrzeugs ausgeführt, die der Geste zugeordnet ist.

Aus der WO 2015/074425 A1 ist ein Verfahren zur Bestätigung eines Bezahlvorgangs bekannt, wobei der Vorgang mittels der Eingabe eines Eingabemusters auf einem Endgerät bestätigt wird.

Der Erfindung liegt das technische Problem zugrunde, ein verbessertes Verfahren zum Auslösen einer sicherheitsrelevanten Funktion eines Systems mittels eines Endgerätes zur Verfügung zu stellen sowie ein geeignetes System zu schaffen.

Die Lösung des technischen Problems ergibt sich durch ein Verfahren mit den Merkmalen des Anspruchs 1 sowie ein System mit den Merkmalen des Anspruchs 5. Weitere vorteilhafte Ausgestaltungen der Erfindung ergeben sich aus den Unteransprüchen.

Hierzu umfasst das Verfahren die folgenden Verfahrensschritte:
- Generieren oder Auswählen eines Eingabemusters durch das System. Vorzugsweise erfolgt dabei die Auswahl des Eingabemusters mittels eines Zufallsgenerators aus einer Anzahl vorbestimmter Eingabemuster. Die Eingabemuster können dabei Tipp-Muster oder kontinuierliche Muster, insbesondere geometrische Formen oder Zahlen, sein.
- Eingabe einer Anforderung zur Durchführung der Funktion mittels des Endgeräts.

Dabei sei angemerkt, dass die Reihenfolge dieser beiden Verfahrensschritte auch umgekehrt sein kann, d.h. das System generiert oder wählt das Eingabemuster erst aus, wenn eine Anforderung gestellt wird.
- Das Eingabemuster wird an das Endgerät übertragen.
- Auf einer Anzeige- und Bedienoberfläche des Endgeräts wird das Eingabemuster dargestellt, das ein Nutzer eingeben muss. Die Eingabe kann dabei mittels eines Fingers bei einer Touchscreen-Oberfläche oder mittels einer Maus oder eines ähnlichen Eingabeelements bei einer gewöhnlichen Anzeigeeinheit erfolgen.
- Die Eingabe des Nutzers auf der Anzeige- und Bedienoberfläche wird durch das Endgerät erfasst und abgespeichert.
- Die erfasste und abgespeicherte Eingabe vom Endgerät wird an das System übertragen und von diesem empfangen.
- Das System vergleicht das übertragene Eingabemuster mit der empfangenen Eingabe, wobei das System die Funktion durchführt, wenn die empfangene Eingabe innerhalb eines vorgegebenen Maßes mit dem Eingabemuster übereinstimmt.

Da die Eingabe des Eingabemusters eine gewisse Komplexität aufweist, wird sicher vermieden, dass es sich um eine unbeabsichtigte Eingabe eines Nutzers handelt bzw. ausgeschlossen, dass es sich nicht um einen Menschen handelt. Das Eingabemuster stellt also gleichzeitig ein "captcha" dar.

Die Kommunikation zwischen System und Endgerät ist dabei vorzugsweise drahtlos. Das Endgerät kann beispielsweise ein Smart-Phone, ein PC oder ein anderes geeignetes Endgerät sein, um ein System fernzusteuern. Das System kann beispielsweise eine Roboteranlage, eine medizinische Anlage oder Ähnliches sein, wobei in einer bevorzugten Ausführungsform das System ein Kraftfahrzeug ist, wobei die sicherheitsrelevante Funktion beispielsweise das Einleiten einer automatisierten Fahrt, eines automatisierten Parkvorgangs oder ein Einschalten eines Motors für Klimatisierungszwecke ist.

Dabei übermittelt das System vorab das Eingabemuster an einen Server, wobei die Anforderung zur Durchführung der Funktion vom Endgerät an den Server übermittelt wird, der dann das Eingabemuster an das Endgerät übermittelt. Da üblicherweise die Datenübertragung zwischen einem Endgerät und einem solchen Server schneller als zwischen Endgerät und System (z.B. Kraftfahrzeug) ist, wird so die Auslösung beschleunigt, wobei jedoch die Überprüfung im System verbleibt.

In einer Ausführungsform wird mit dem Eingabemuster eine Kennung übertragen und das Endgerät überträgt die Kennung mit der erfassten und abgespeicherten Eingabe an das System. Die Kennung ist dabei vorzugsweise eine fortlaufende Kennung. Dies stellt insbesondere bei einem Multi-User-Betrieb eine weitere Sicherheitsmaßnahme dar. Hat ein Nutzer z.B. bereits eine Eingabe mit der Kennung vorgenommen, so generiert oder wählt das System ein neues Eingabemuster mit einer neuen Kennung aus. Hierdurch kann das System sicher feststellen, dass sich die empfangene Eingabe auch jeweils auf das aktuelle Eingabemuster bezieht.

In einer weiteren Ausführungsform wird die Eingabe in Form einer Koordinatenfolge (z.B. X-Y-Koordinaten) oder einer Segment-Abfolge erfasst und abgespeichert.

Hinsichtlich der Ausgestaltung des Systems wird vollinhaltlich auf die vorangegangenen Ausführungen Bezug genommen.

Die Erfindung wird nachfolgend anhand bevorzugter Ausführungsbeispiele näher erläutert. Die Figuren zeigen:
- Fig. 1: eine schematische Darstellung eines Verfahrensablaufs in einer ersten, nicht anspruchsgemäßen Ausführungsform,
- Fig. 2: eine schematische Darstellung eines Verfahrensablaufs in einer zweiten, anspruchsgemäßen Ausführungsform,
- Fig. 3: eine beispielhafte Darstellung eines Eingabemusters auf einem Endgerät,
- Fig. 4a-c: verschiedene Darstellungen von Eingabemustern mit einer segmentweise unterteilten Anzeige- und Bedienoberfläche und
- Fig. 5a-c: verschiedene Darstellungen von Eingabemustern in einer Koordinatendarstellung.

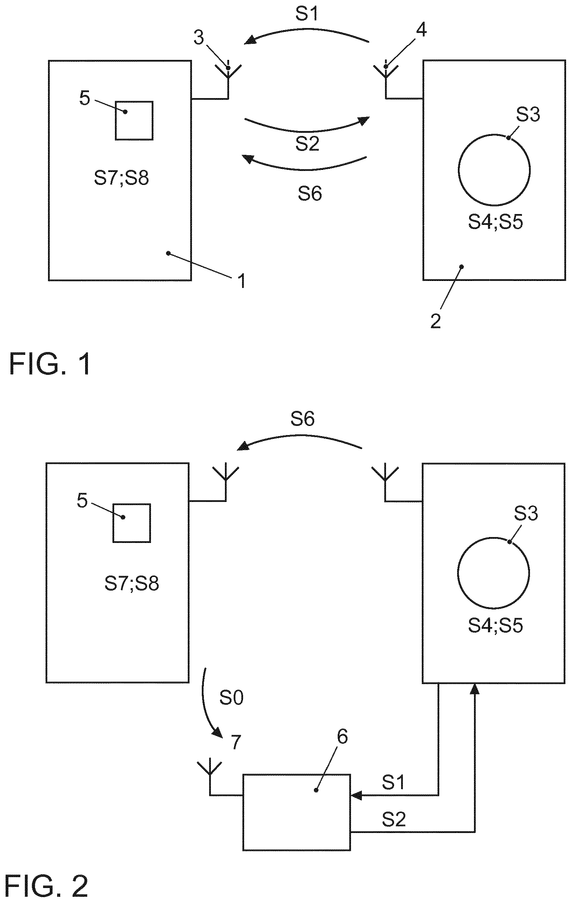

In der Fig. 1 ist ein erstes, nicht anspruchsgemäßes Ausführungsbeispiel zur Auslösung einer sicherheitsrelevanten Funktion eines Systems 1 mittels eines Endgeräts 2 dargestellt. Sowohl das System 1 als auch das Endgerät 2 verfügen über eine Luftschnittstelle 3, 4, über die diese miteinander kommunizieren (beispielsweise mittels Bluetooth). Das System 1 verfügt über einen Speicher 5, in dem verschiedene Eingabemuster abgelegt sind. Das System 1 ist beispielsweise ein Kraftfahrzeug und das Endgerät 2 ein Smartphone.

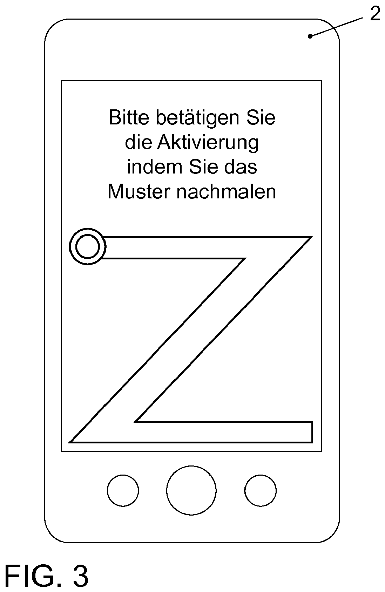

Möchte nun ein Nutzer mittels des Endgeräts 2 eine sicherheitsrelevante Funktion durch das System 1 ausführen, so gibt der Nutzer in das Endgerät 2 eine Anforderung zur Durchführung der Funktion ein, die dann an das System 1 übertragen wird (Verfahrensschritt S1). Das System 1 empfängt diese Anforderung und wählt mittels eines Zufallsgenerators ein Eingabemuster aus einer Vielzahl von Eingabemustern aus, die in dem Speicher 5 abgelegt sind. In einem Verfahrensschritt S2 überträgt das System 1 das ausgewählte Eingabemuster gegebenenfalls mit einer fortlaufenden Kennung an das Endgerät 2. Das übertragene Eingabemuster wird dabei in dem System 1 zwischengespeichert. Dabei kann vorgesehen sein, dass das übertragene Eingabemuster nur für eine vorbestimmte Zeit gültig bleibt. Das Endgerät 2 empfängt das Eingabemuster und stellt dieses auf einer Anzeige- und Bedienoberfläche dar (Verfahrensschritt S3). Im dargestellten Beispiel gemäß Fig. 1 ist das Eingabemuster ein Kreis. Dabei wird der Nutzer aufgefordert, das dargestellte Eingabemuster nachzuzeichnen, was beispielsweise in Fig. 3 dargestellt ist. In einem Verfahrensschritt S4 malt dann der Nutzer das Eingabemuster nach, was durch das Endgerät 2 erfasst und abgespeichert wird (Verfahrensschritt S5).

Die erfasste und abgespeicherte Eingabe wird in einem Verfahrensschritt S6 an das System 1 übertragen (gegebenenfalls zusammen mit der übermittelten Kennung). In einem Verfahrensschritt S7 überprüft das System 1 die empfangene Eingabe und vergleicht diese mit dem Eingabemuster. Stimmen Eingabemuster und Eingabe überein, so wird die Funktion durch das System 1 durchgeführt (Verfahrensschritt S8).

In der Fig. 2 ist eine anspruchsgemäße Ausführungsform mit einem zwischengeschalteten Server 6 dargestellt. Der Server 6 weist dabei eine Luftschnittstelle 7 auf. In einem vorgelagerten Verfahrensschritt S0 überträgt das System 1 ein Eingabemuster an den Server 6. Im Unterschied zum Verfahren gemäß Fig. 1 wird die Anforderung zur Durchführung der Funktion (Verfahrensschritt S1) nicht direkt an das System 1, sondern an den Server 6 gestellt, der dann das Eingabemuster an das Endgerät 2 übermittelt, wobei dann die weiteren Verfahrensschritte S3 bis S8 wie zuvor beschrieben ablaufen. Der Vorteil ist, dass die Datenverbindung (drahtlos oder drahtgebunden) zwischen Endgerät 2 und Server 6 sehr schnell sein kann, sodass der Verfahrensablauf insgesamt beschleunigt wird.

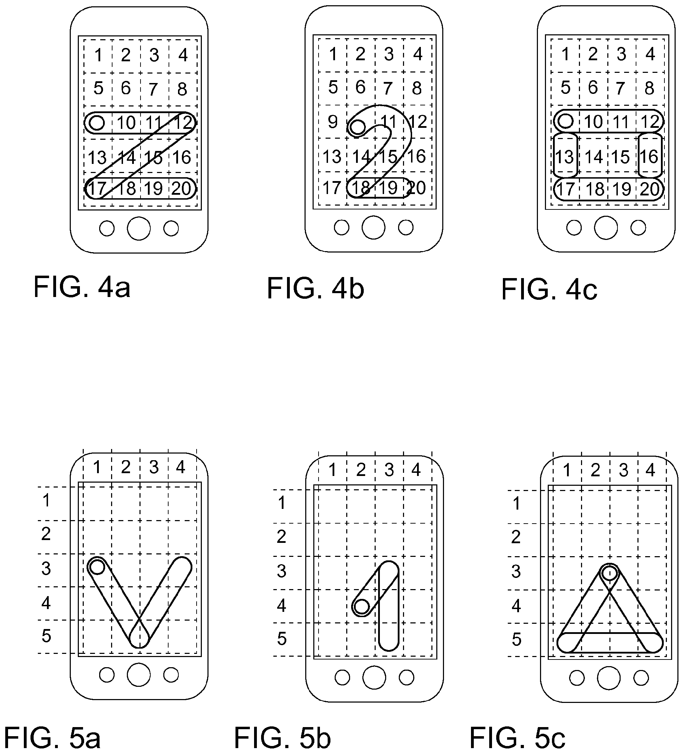

Anhand der Fig. 4a-c bw. Fig. 5a-c soll nun kurz erläutert werden, wie die Übertragung der Eingabe an das System erfolgen kann. Die Eingabemuster können dabei Buchstaben, Zahlen oder geometrische Figuren sein. Dabei stellt die Anzeige- und Bedienoberfläche des Endgeräts 2 gemäß den Fig. 4a-c eine virtuelle Tastatur da, wobei die Anzeige- und Bedienoberfläche in Segmente 1-20 unterteilt ist. Analog ist die Anzeige- und Bedienoberfläche in den Fig. 5a-c in X-Y-Koordinaten unterteilt. Die zugehörigen erwarteten Eingaben als Segmente bzw. Koordinaten beim Nachzeichnen sind in den nachfolgenden Tabellen für die Eingabemuster in den Fig. 4a-c bzw. Fig. 5a-c dargestellt.

| Muster-Nr. | Muster |
|---|---|
| 1 | 9/10/11/12/13/14/15/17/18/19/20 |
| 2 | 10/11/12/15/16/18/19/20 |
| 3 | 9/10/11/12/16/20/19/18/17/13 |
| 4 | ........ |

| Muster-Nr. | Muster XY-Achse |
|---|---|
| 1 | 13/14/24/25/35/34/44/43 |
| 2 | 24/32/33/34/35 |
| 3 | 23/33/34/45/35/25/15/14/24 |
| 4 | ........ |

Für die in Fig. 4b dargestellte 2 werden also die Berührung der Segmente 10, 11, 12, 15, 16, 18, 19, 20 in dieser Reihenfolge erwartet. Wie zu erkennen ist, kann es dabei beispielsweise dazu kommen, dass Segment 16 vor Segment 15 berührt wird. Daher kann vorgesehen sein, dass die Funktion auch dann ausgeführt wird, wenn eine ausreichend große Übereinstimmung zwischen der Eingabe im Endgerät 2 und den hinterlegten Segmenten bzw. Koordinaten im System besteht.

## Patentansprüche

1. Verfahren zum Auslösen einer sicherheitsrelevanten Funktion eines Systems (1) mittels eines Endgeräts (2), umfassend folgende Verfahrensschritte:
a) Generieren oder Auswählen eines Eingabemusters durch das System (1) und Übermitteln des Eingabemusters an einen Server (6),
b) Eingabe einer Anforderung zur Durchführung der Funktion mittels des Endgeräts (2), wobei die Anforderung zur Durchführung der Funktion vom Engerät (2) an den Server (6) übermittelt wird,
c) Übertragen des Eingabemusters an das Endgerät (2), wobei der Server (6) das Eingabemuster an das Endgerät (2) übermittelt,
d) Darstellen des Eingabemusters auf einer Anzeige- und Bedienoberfläche des Endgeräts (2), das ein Nutzer eingeben muss,
e) Erfassen und Abspeichern einer Eingabe eines Nutzers auf der Anzeige- und Bedienoberfläche durch das Endgerät (2),
f) Übertragen der erfassten und abgespeicherten Eingabe vom Endgerät (2) an das System (1),
g) Empfangen der erfassten und abgespeicherten Eingabe durch das System (1),
h) Vergleichen der empfangenen Eingabe mit dem übertragenen Eingabemuster im System (1) und
i) Durchführen der Funktion durch das System (1), wenn die empfangene Eingabe innerhalb eines vorgegebenen Maßes mit dem Eingabemuster übereinstimmt,

2. Verfahren nach Anspruch 1, **dadurch gekennzeichnet, dass** mit dem Eingabemuster eine Kennung übertragen wird und das Endgerät (2) die Kennung mit der erfassten und abgespeicherten Eingabe an das System (1) überträgt.

3. Verfahren nach einem der vorangegangenen Ansprüche, **dadurch gekennzeichnet, dass** die Eingabe in Form einer Koordinatenfolge oder einer Segment-Abfolge erfasst und abgespeichert wird.

4. Verfahren nach einem der vorangegangenen Ansprüche, **dadurch gekennzeichnet, dass** das System (1) ein Kraftfahrzeug ist.

5. System zum Auslösen einer sicherheitsrelevanten Funktion, wobei das System (1) mindestens eine Schnittstelle zur Kommunikation mit einem Endgerät (2) und mindestens eine Schnittstelle zur Kommunikation mit einem Server (6) aufweist, wobei das System (1) derart ausgebildet ist, dass ein Eingabemuster generiert oder ausgewählt wird, das an einen Server (6) übertragen wird, wobei das System (1) derart ausgebildet ist, dass über die Schnittstelle Eingaben des Endgeräts (2) empfangen werden und mit dem übertragenen Eingabemuster verglichen werden, wobei das System (1) die Funktion durchführt, wenn die empfangene Eingabe innerhalb eines vorgegebenen Maßes mit dem Eingabemuster übereinstimmt,

6. System nach Anspruch 5, **dadurch gekennzeichnet, dass** das System (1) ein Kraftfahrzeug ist.

## Claims

1. Method for triggering a security-relevant function of a system (1) by means of a terminal (2), comprising the following method steps:
a) generation or selection of an input pattern by the system (1) and conveying of the input pattern to a server (6),
b) inputting of a request for carrying out the function by means of the terminal (2), wherein the request for carrying out the function is conveyed from the terminal (2) to the server (6),
c) transmitting the input pattern to the terminal (2), wherein the server (6) conveys the input pattern to the terminal (2),
d) displaying, on a display and user interface of the terminal (2), of the input pattern that a user must enter,
e) capturing and storing of an input of a user on the display and user interface by the terminal (2),
f) transmission of the captured and stored input from the terminal (2) to the system (1),
g) receiving of the captured and stored input by the system (1),
h) comparing of the received input with the transmitted input pattern in the system (1) and
i) carrying out of the function by the system (1) if the received input matches the input pattern to a predefined extent.

2. Method according to claim 1, **characterized in that** an identifier is transmitted with the input pattern, and the terminal (2) transmits the identifier with the captured and stored input to the system (1).

3. Method according to one of the preceding claims, **characterized in that** the input is captured and stored in the form of a coordinate sequence or a segment sequence.

4. Method according to one of the preceding claims, **characterized in that** the system (1) is a motor vehicle.

5. System for triggering a security-relevant function, wherein the system (1) comprises at least one interface for communication with a terminal (2) and at least one interface for communication with a server (6), wherein
the system (1) is designed such that an input pattern is generated or selected, which input pattern is transmitted a server (6), wherein the system (1) is designed such that via the interface inputs of the terminal (2) are received and are compared with the transmitted input pattern, wherein the system (1) carries out the function if the received input matches the input pattern to a predefined extent.

6. System according to claim 5, **characterized in that** the system (1) is a motor vehicle.

## Revendications

1. Procédé pour déclencher une fonction relative à la sécurité d'un système (1) au moyen d'un terminal (2), comprenant les étapes suivantes :
a) génération ou sélection d'un modèle de saisie par le système (1) et communication du modèle de saisie à un serveur (6),
b) saisie d'une demande de réalisation de la fonction au moyen du terminal (2), la demande de réalisation de la fonction étant communiquée du terminal (2) au serveur (6),
c) transmission du modèle de saisie au terminal (2), le serveur (6) communiquant le modèle de saisie au terminal (2),
d) représentation du modèle de saisie sur une interface d'affichage et d'opération du terminal (2), qu'un utilisateur doit saisir,
e) acquisition et mémorisation d'une saisie d'un utilisateur sur l'interface d'affichage et d'opération par le terminal (2),
f) transmission de la saisie acquise et mémorisée du terminal (2) au système (1),
g) réception de la saisie acquise et mémorisée par le système (1),
h) comparaison de la saisie reçue avec le modèle de saisie transmis dans le système (1) et
i) réalisation de la fonction par le système (1) lorsque la saisie reçue coïncide dans une marge de tolérance prédéfinie avec le modèle de saisie.

2. Procédé selon la revendication 1, **caractérisé en ce qu'**un identificateur est transmis avec le modèle de saisie et le terminal (2) transmet l'identificateur au système (1) avec la saisie acquise et mémorisée.

3. Procédé selon l'une des revendications précédentes, **caractérisé en ce que** la saisie est acquise et mémorisée sous la forme d'une séquence de coordonnées ou d'une séquence de segments.

4. Procédé selon l'une des revendications précédentes, **caractérisé en ce que** le système (1) est un véhicule automobile.

5. Système pour déclencher une fonction relative à la sécurité, le système (1) possédant au moins une interface servant à la communication avec un terminal (2) et au moins une interface servant à la communication avec un serveur (6), le système (1) étant configuré de telle sorte qu'un modèle de saisie est généré ou sélectionné, lequel est transmis à un serveur (6), le système (1) étant configuré de telle sorte que des saisies du terminal (2) sont reçues par le biais de l'interface et comparées avec le modèle de saisie transmis, le système (1) réalisant la fonction lorsque la saisie reçue coïncide dans une marge de tolérance prédéfinie avec le modèle de saisie.

6. Système selon la revendication 5, **caractérisé en ce que** le système (1) est un véhicule automobile.
